# EUROPEAN PATENT SPECIFICATION

(11) **EP 0 815 725 B1**
(45) Date of publication and mention of the grant of the patent: **15.12.1999**
(21) Application number: 97202008.5
(22) Date of filing: 02.07.1997
(51) Int. Cl.: A01K 5/02

(54) **A device for supplying feed**
Vorrichtung zu Zuführung von Futter
Dispositif pour distribuer des aliments

(30) Priority: 03.07.1996 NL 1003488
(43) Date of publication of application: 07.01.1998
(73) Proprietor: Nooren, Jacobus Adrianus Johannus Clemens, 5282 JK Boxtel (NL)
(72) Inventor: Nooren, Jacobus Adrianus Johannus Clemens, 5282 JK Boxtel (NL)
(74) Representative: Veldman-Dijkers, Cornelia G.C., Ir.

(56) References cited:
- EP-A- 0 293 520
- DE-A- 3 913 401
- US-A- 3 834 593
- DEUTSCHE AGRARTECHNIK, vol. 18, no. 7, July 1968, DE, page 326 XP002025838 "Kinematische Schemata von Dosierprinzipien für die Kraftfutterdosierung in stationären Anlagen"

## Description

The invention relates to a device for supplying feed, which device is provided with a supply pipe which can be closed by means of a shut-off valve and which comprises an inlet pipe, a feed-through pipe and an outlet pipe, whereby said feed-through pipe is connected to an inlet pipe with a first end and to an outlet pipe with a second end, whilst the shut-off valve can alternately be moved from a first position, in which said first end is closed by the shut-off valve and said second end is open, via a second position, in which said first as well as said second end are closed, to a third position, in which said second end is closed by the shut-off valve and said first end is open, and vice versa.

Such a supply pipe, which is known from European Patent Application EP-A1-0 293 520, is used for supplying feed from a container to separate feeding places, whereby a supply pipe is for example disposed at each feeding place. A device of this kind is for example used in intensive stock farming of inter alia pigs for supplying granular feed, liquid feed or slop feed composed of a liquid and solid constituents. The passage through the supply pipe is closed by means of the shut-off valve. Said passage through the supply pipe can be opened by moving the shut-off valve, as a result of which feed can flow from the container to the feeding place through the supply pipe. Feed flows either from the inlet pipe into the feed-through pipe through said first end, or from said feed-through pipe to the feeding place through said second end and the outlet pipe. As a result of this an unrestricted outflow of feed is prevented in a simple manner. The maximum amount of feed which can flow from the supply pipe is determined by the dimensions of the feed-through pipe. Inter alia with pigs it is usual for the pigs to operate the shut-off valve themselves, for example by moving an actuating element. When the pigs release the operating element, the shut-off valve must be automatically moved to a position in which it closes the supply pipe, in order to prevent feed continuing to flow from the supply pipe. In the known devices this is effected by means of relatively complicated mechanisms.

With the device that is known per se the shut-off valve is provided with an O-ring, which is in slipping contact with the inner wall of the cylindrical supply pipe.

When the device is used for feed which contains liquid components, the O-ring must bear tightly against the inner wall in order to ensure a proper sealing action. As a result of this rather much force is needed to move the shut-off valve, however.

When the device is used for feed which contains liquid as well as solid components, the presence of the solid components will cause the O-ring to wear relatively quickly, as a result of which the O-ring must be replaced regularly in order to ensure a proper sealing action.

The object of the invention is to provide a device wherein a proper sealing action between the shut-off valve and the supply pipe is ensured.

This objective is accomplished with the device according to the invention in that the outlet pipe is provided with a stop plate comprising a passage, against which the shut-off valve bears in said third position in such a manner as to shut off said passage.

The shut-off valve abuts against the stop plate and shuts off the passage, as a result of which no feed can get into the outlet pipe. The shut-off valve can be moved to and fro with relatively little force, and due to the absence of contact with the supply pipe it will be hardly liable to wear.

One embodiment of the device according to the invention is characterized in that the inlet pipe is provided with a stop plate comprising a passage, against which the shut-off valve bears in said first position in such a manner as to shut off said passage.

Only the feed present in the feed-through pipe can flow into the outlet pipe in said first position, as a result of which the amount of feed flowing out is exactly known.

Another embodiment of the device according to the invention is characterized in that said shut-off valve can be moved to a third position between said first and said second position, in which third position said first end as well as said second end are closed.

As a result of this the risk of both ends being open at the same time is fully excluded.

The invention will be explained in more detail with reference to a drawing, in which:
Figures 1A-1C are longitudinal sectional views of a first embodiment of a device according to the invention, showing the shut-off valve in three different positions;
Figures 2A-2C are longitudinal sectional views of a second embodiment of a device according to the invention, showing the shut-off valve in three different positions;
Figures 3A-3C are longitudinal sectional views of a third embodiment of a device according to the invention, showing the shut-off valve in three different positions.

Like parts are numbered alike in the Figures.

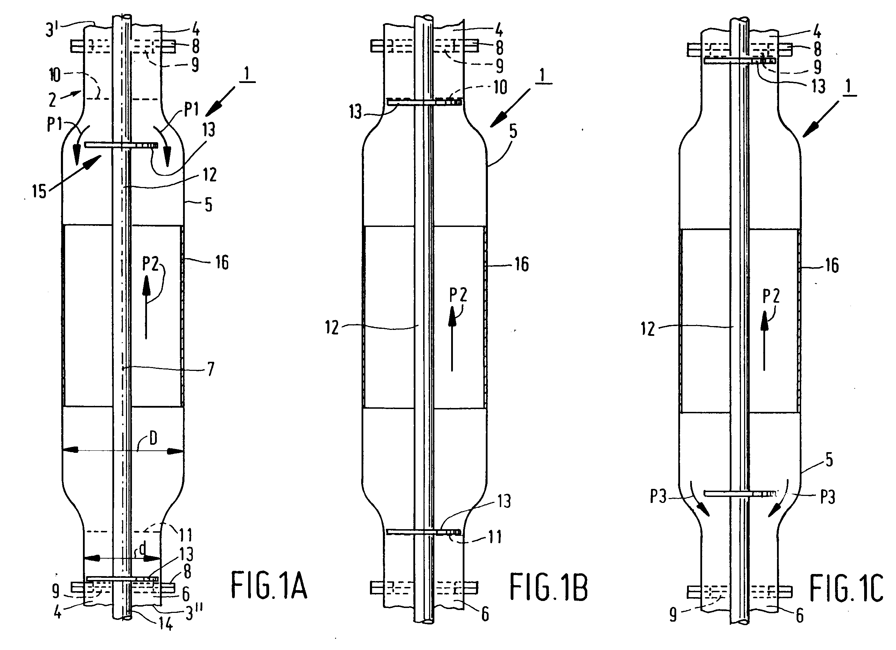

Figures 1A-1C are longitudinal sectional views of a first embodiment of a device according to the invention, which comprises an elongated supply pipe 2, which is connected, via piping (not shown), to a feed container (not shown) with a first end 3'. An end 3" of supply pipe 2 remote from said first end 3' opens at a feeding place (not shown). The feeding place may comprise a bin or a trough in which feed supplied via supply pipe 2 is accessible to animals. The supply pipe 2 comprises an inlet pipe 4, a feed-through pipe 5 and an outlet pipe 6, which extend along a common axis 7. Inlet pipe 4 and outlet pipe 6 are each provided with a stop plate 8, which comprises a passage 9. Feed-through pipe 5 is connected to inlet pipe 4 with an end 10, which is illustrated in a dotted line. The position of end 10 may be selected relatively freely, it may also be positioned slightly higher or lower. Feed-through pipe 5 is connected to outlet pipe 6 with an end 11 remote from end 10. Said end 11, which is illustrated in a dotted line, may also be positioned slightly higher or lower. Inlet pipe 4, end 10, end 11 and outlet pipe 6 all have an internal diameter d. Feed-through pipe 5 has an internal diameter D which is larger than diameter d. An elongated rod 12 extending along common axis 7 is disposed in supply pipe 2. Two disc-shaped plates 13 extending transversely to rod 12 are fixed to said rod, which plates are spaced apart by a distance which corresponds with the distance between first and second ends 10, 11 of feed-through pipe 5. The diameter of plates 13 is selected such that a plate 13 positioned in end 10, 11 closes the respective end 10, 11. Rod 12 can be moved in a direction indicated by arrow P2 and in an opposite direction by means of an actuating element (not shown), which is connected to for example a lower end 14 of rod 12. Said actuating element may be a lever to be operated by the animals or an electrically controlled element. Rod 12 and the plates 13 fixed thereto form a shut-off valve 15 which is movable within supply pipe 2.

The supply pipe shown in Figures 1A-1B is provided with a sight glass 16 near feed-through pipe 5, through which the presence of feed in the feed-through pipe can be detected.

In the position of shut-off valve 15 shown in Figure 1A one plate 13 abuts against the stop plate 8 disposed in outlet pipe 6, thus shutting off the passage from feed-through pipe 5 to the end 3" of the outlet pipe. In the position shown in Figure 1A the passage from inlet pipe 4 to feed-through pipe 5 is open, and feed will flow in the direction indicated by arrow P1 from the feed container (not shown), via inlet pipe 4, past the other plate 13 into feed-through pipe 5.

If feed is to be supplied near the feeding place, shut-off valve 15 will be moved in the direction indicated by arrow P2, via the position shown in Figure 1B, to the position illustrated in Figure 1B, by the animals or by electronic means. In the position shown in Figure 1B, plates 13 are positioned near ends 10, 11, whereby plates 13 closed the passage from inlet pipe 4 to feed-through pipe 5 as well as the passage from feed-through pipe to outlet pipe 6. The passage from feed-through pipe 5 to outlet pipe 6 will remain closed during the movement of shut-off valve 15 from the position shown in Figure 1A to the position shown in Figure 1B, whilst also the passage from said inlet pipe 4 to feed-through pipe 5 will be closed slowly. The passage from inlet pipe 4 to feed-through pipe will remain closed during the subsequent further movement of plates 13 in the direction indicated by arrow P2, whilst the passage from feed-through pipe 5 to outlet pipe 6 will be opened slowly. Shut-off valve 15 is moved in the direction indicated by arrow P2 until the upper plate 13 abuts against stop plate 8 of inlet pipe 4. In the meantime the feed stored in feed-through pipe 5 flows in the direction indicated by arrow P3, via outlet pipe 6, to the feeding place (not shown). When the actuating element (not shown) is released by the animals, shut-off valve 15 will be moved in an opposite direction to arrow P2 as a result of the pressure exerted by the feed present in inlet pipe 4, whereby shut-off valve 15 will first take up the position shown in Figure 1B and then the position shown in Figure 1A, as a result of which feed can flow from inlet pipe 4 into feed-through pipe 5, and the cycle may be repeated.

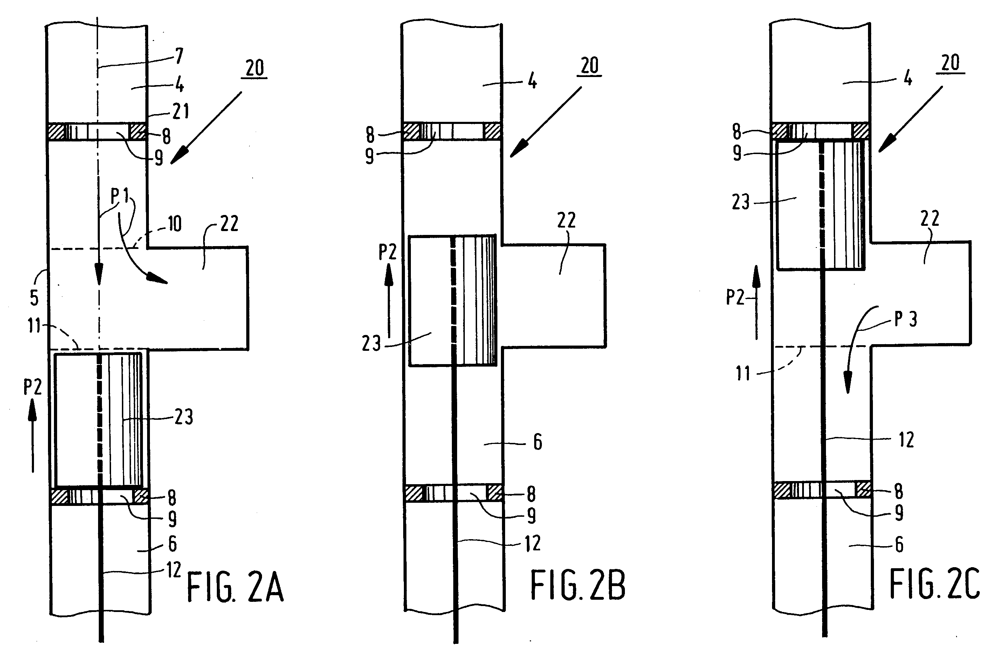

Figures 2A-2C show a second embodiment of a device 20 according to the invention. Device 20 is provided with an elongated pipe 21, which extends along a common axis 7. Elongated pipe 21 is provided with a storage portion 22 extending transversely to common axis 7. A piston-shaped shut-off valve 23 is movably accommodated in elongated pipe 21, whereby said shut-off valve can be moved in a direction indicated by arrow P2 by means of a rod 12. Pipe 21 comprises an inlet pipe 4, a feed-through pipe 5, which is in line with inlet pipe 4, and an outlet pipe 6, which is in line with said feed-through pipe. Inlet pipe 4 and outlet pipe 6 are each provided with a stop plate 8, which comprises a passage 9. Feed-through pipe 5 comprises storage portion 22. The passage from supply pipe 4 to feed-through pipe 5 in the form of first end 10 is illustrated in a dotted line. The passage from feed-through pipe 5 to outlet pipe 6 in the form of end 11 is illustrated in a dotted line. It will be apparent that first end 10 may also be positioned slightly higher and end 11 may be positioned slightly lower.

In the position of shut-off valve 23 shown in Figure 2A feed flows through inlet pipe 4, in the direction indicated by arrow P1, into feed-through pipe 5 and storage portion 22 associated with feed-through pipe 5. Shut-off valve 23, which is positioned over passage 9 and which bears against stop plate 8, prevents feed from flowing into outlet pipe 6.

In the position of shut-off valve 23 shown in Figure 2B first end 10 as well as second end 11 are closed, as a result of which no transport of feed can take place.

In the position of shut-off valve 23 shown in Figure 2C second end 11 is open and feed flows from storage portion 22 into outlet pipe 6. Passage 9 from inlet pipe 4 is closed by shut-off valve 23. When the actuating element (not shown) is released by the animals, shut-off valve 23 will move in an opposite direction to arrow P2 under the influence of the pressure exerted by the feed present in inlet pipe 4, whereby shut-off valve 23 will first take up the position shown in Figure 2B, after which it will take up the position shown in Figure 2B, and the cycle can be repeated.

Figures 3A-3C show a third embodiment 30 according to the invention, which is provided with an elongated pipe 31, which extends along a common axis 7, and a U-shaped bypass 32, which is connected to pipe 31. U-shaped bypass 32 is connected near a first end 10 to a part of pipe 31 making up inlet pipe 4, whilst U-shaped bypass 32 is connected with a second end 11 to a part of pipe 31 making up outlet pipe 6. Inlet pipe 4 and outlet pipe 6 are each provided with a stop plate 8, which comprises a passage 9.

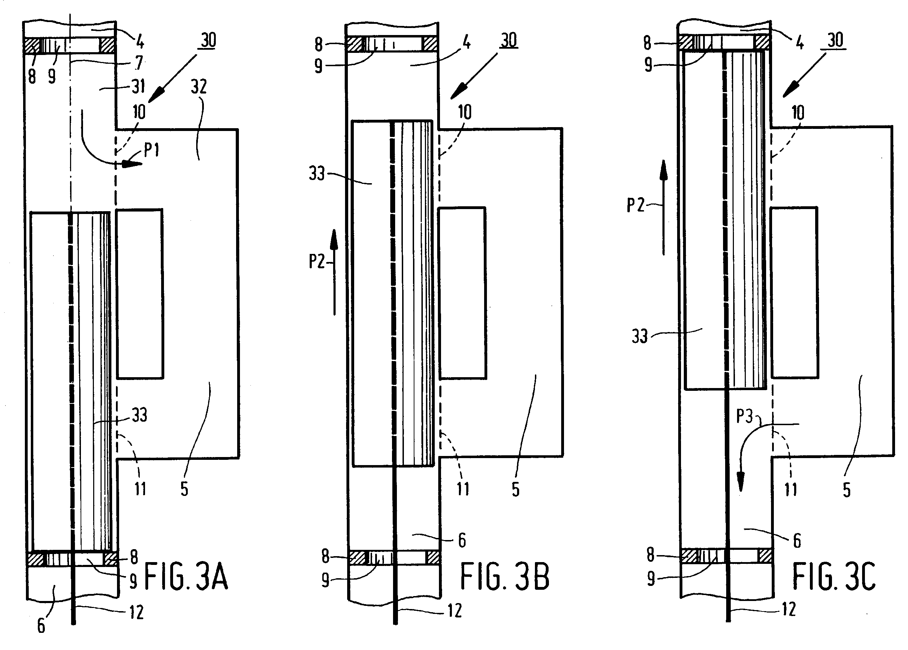

A piston-shaped shut-off valve 33 is movably accommodated in pipe 31, whereby shut-off valve 33 can be moved along said common axis by means of a rod 12 connected to shut-off valve 33. In the position of shut-off valve 33 shown in Figure 3A second end 11 is closed, whilst the passage from inlet pipe 4 and feed-through pipe 5 is open and feed flows in the direction indicated by arrow P1 into feed-through pipe 5. Feed is prevented from flowing out of the device by the shut-off valve 33 bearing against stop plate 8. In the position shown in Figure 3B shut-off valve 33 has been moved in the direction indicated by arrow P2 until first end 10 as well as second end 11 are closed by shut-off valve 33. In the position shown in Figure 3C shut-off valve 33 has been moved even further in the direction indicated by arrow P2 until second end 11 is open and feed flows from feed-through pipe 5 into outlet pipe 6. When the actuating element (not shown) connected to rod 12 is released by the animals, shut-off valve 33 will move in an opposite direction to arrow P2 and take up the position shown in Figure 3A again, after which the cycle can be repeated.

Pipes 4, 5, 6 may simply be made of plastic material, such as PVC, or of a metal. The shut-off valve is preferably made of a metal.

Instead of providing a cylindrical shut-off valve 23, 33, it is also possible to provide rod 12 with two spaced-apart discs.

## Claims

1. A device for supplying feed, which device (1) is provided with a supply pipe (2) which can be closed by means of a shut-off valve and which comprises an inlet pipe (4), a feed-through pipe (5) and an outlet pipe (6), whereby said feed-through pipe (5) is connected to an inlet pipe (4) with a first end (10) and to an outlet pipe (6) with a second end (11), whilst the shut-off valve (15, 23, 33) can alternately be moved from a first position, in which said first end (10) is closed by the shut-off valve and said second end (11) is open, via a second position, in which said first as well as said second end (10, 11) are closed, to a third position, in which said second end (11) is closed by the shut-off valve and said first end (10) is open, and vice versa, characterized in that the outlet pipe (6) is provided with a stop plate (8) comprising a passage (9), against which the shut-off valve (15, 23, 33) bears in said third position in such a manner as to shut off said passage (9).

2. A device according to claim 1, characterized in that the inlet pipe (4) is provided with a stop plate (8) comprising a passage (9), against which the shut-off valve bears in said first position in such a manner as to shut off said passage (9).

3. A device according to any one of the preceding claims, characterized in that said inlet pipe (4), said feed-through pipe (5) and said outlet pipe (6) extend along a common axis (7), whereby the shut-off valve (15), which is disposed partially within said feed-through pipe (5), is movable along said common axis (7).

4. A device according to claim 3, characterized in that the internal diameter of said first and said second end (10, 11) is smaller than the internal diameter of the part of the feed-through pipe (5) that is located between said first and said second end.

5. A device according to claim 3, characterized in that said feed-through pipe (5) comprises a storage portion (22) extending perpendicularly to said common axis (7).

6. A device according to claim 1 or 2, characterized in that said inlet pipe (4) and said outlet pipe (6) extend along a common axis (7) and are interconnected, whereby said feed-through pipe (5) forms a U-shaped bypass of the inlet pipe (4) and the outlet pipe (6), which are in line, whilst said shut-off valve (33) is movable along said common axis (7).

## Patentansprüche

1. Einrichtung zur Futterzuführung, die ein Zuführungsrohr (2) aufweist, das mittels eines Absperrventils geschlossen werden kann und ein Einlaßrohr (4), ein Futterdurchlaßrohr (5) und ein Auslaßrohr (6) aufweist, wobei das Futterdurchlaßrohr (5) über ein erstes Ende (10) mit dem Einlaßrohr (4) und über ein zweites Ende (11) mit dem Auslaßrohr (6) verbunden ist und wobei das Absperrventil (15, 23, 33) alternierend in eine erste Position, in der das erste Ende (10) mittels des Absperrventils geschlossen und das zweite Ende (11) geöffnet ist, über eine zweite Position, in der sowohl das erste Ende (10) als auch das zweite Ende (11) geschlossen ist, in eine dritte Position bewegt werden kann, in der das zweite Ende (11) mittels des Absperrventils geschlossen und das erste Ende (10) geöffnet ist, und umgekehrt,
**dadurch gekennzeichnet**,
daß das Auslaßrohr (6) mit einer einen Durchlaß (9) enthaltenden Anschlagplatte (8) versehen ist, an der das Absperrventil (15, 23, 33) in seiner dritten Position so anschlägt, daß dieser Durchlaß (9) geschlossen ist.

2. Einrichtung nach Anspruch 1,
**dadurch gekennzeichnet**,
daß das Einlaßrohr (4) mit einer einen Durchlaß (9) enthaltenden Anschlagplatte (8) versehen ist, an der das Absperrventil in seiner ersten Stellung so anschlägt, daß dieser Durchlaß (9) geschlossen ist.

3. Einrichtung nach einem der vorhergehenden Ansprüche,
**dadurch gekennzeichnet**, daß das Einlaßrohr (4), das Futterdurchlaßrohr (5) und das Auslaßrohr (6) sich entlang einer gemeinsamen Achse (7) erstrecken, wobei das Absperrventil (15), das teilweise innerhalb des Futterdurchlaßrohres (5) angeordnet ist, entlang dieser gemeinsamen Achse (7) bewegbar ist.

4. Einrichtung nach Anspruch 3,
**dadurch gekennzeichnet**,
daß der Innendurchmesser des ersten Endes (10) und des zweiten Endes (11) kleiner ist als der Innendurchmesser des Teils des Futterdurchlaßrohres (5), der sich zwischen dem ersten und zweiten Ende erstreckt.

5. Einrichtung nach Anspruch 3,
**dadurch gekennzeichnet**,
daß das Futterdurchlaßrohr (5) einen Vorratsteil (22) aufweist, der sich rechtwinklig zu der gemeinsamen Achse (7) erstreckt.

6. Einrichtung nach Anspruch 1 oder 2,
**dadurch gekennzeichnet**,
daß sich das Einlaßrohr (4) und das Auslaßrohr (6) entlang einer gemeinsamen Achse (7) erstrecken und miteinander verbunden sind, wobei das Futterdurchlaßrohr (5) einen U-förmigen Bypaß des Einlaßrohres (4) und des Auslaßrohres (6) bildet, die miteinander fluchten, wobei das Absperrventil (33) entlang dieser gemeinsamen Achse (7) bewegbar ist.

## Revendications

1. Un dispositif d'alimentation en nourriture pour bétail, ledit dispositif (1) étant doté d'un tuyau d'alimentation (2) qui peut être fermé au moyen d'une vanne d'arrêt qui comporte un tuyau d'entrée (4), un tuyau de circulation (5) et un tuyau de sortie (6), ledit tuyau de circulation (5) étant raccordé à un tuyau d'entrée (4) avec une première extrémité (10) et à un tuyau de sortie (6) avec une seconde extrémité (11), tandis que la vanne d'arrêt (15, 23, 33) peut être déplacée alternativement à partir d'une première position dans laquelle ladite première extrémité (10) est fermée par la vanne d'arrêt et ladite seconde extrémité (11) est ouverte, en passant par une seconde position dans laquelle tant ladite première que ladite seconde extrémités (10, 11) sont fermées, jusqu'à une troisième position dans laquelle ladite seconde extrémité (11) est fermée par la vanne d'arrêt et ladite première extrémité (10) est ouverte et vice versa, caractérisé en ce que le tuyau de sortie (6) est doté d'une plaque d'arrêt (8) qui comporte un passage (9) contre lequel porte la vanne d'arrêt (15, 23, 33) dans ladite troisième position de façon à fermer ledit passage (9).

2. Un dispositif selon la revendication 1, caractérisé en ce que le tuyau d'entrée (4) est doté d'une plaque d'arrêt (8) qui comporte un passage (9) contre lequel porte la vanne d'arrêt dans ladite première position de façon à fermer ledit passage (9).

3. Un dispositif selon l'une quelconque des revendications précédentes, caractérisé en ce que ledit tuyau d'entrée (4), ledit tuyau de circulation (5) et ledit tuyau de sortie (6) s'étendent le long d'un axe commun (7), ce qui permet à la vanne d'arrêt (15) qui est disposée partiellement à l'intérieur dudit tuyau de circulation (5) de se déplacer le long dudit axe commun (7).

4. Un dispositif selon la revendication 3, caractérisé en ce que le diamètre intérieur desdites première et seconde extrémités (10, 11) est plus petit que le diamètre intérieur de la partie du tuyau de circulation (5) qui est située entre lesdites première et seconde extrémités.

5. Un dispositif selon la revendication 3, caractérisé en ce que ledit tuyau de circulation (5) comporte une portion de stockage (22) qui s'étend perpendiculairement audit axe commun (7).

6. Un dispositif selon la revendication 1 ou 2, caractérisé en ce que ledit tuyau d'entrée (4) et ledit tuyau de sortie (6) s'étendent le long d'un axe commun (7) et sont interconnectés, ledit tuyau de circulation (5) formant une dérivation en forme de U du tuyau d'entrée (4) et ledit tuyau de sortie (6) qui sont alignés, tandis que ladite vanne d'arrêt (33) peut être déplacée le long dudit axe commun (7).
